# EUROPÄISCHE PATENTSCHRIFT

(11) **EP 1 432 621 B1**
(45) Veröffentlichungstag und Bekanntmachung des Hinweises auf die Patenterteilung: **25.04.2007**
(21) Anmeldenummer: 02800584.1
(22) Anmeldetag: 30.09.2002
(51) Int. Cl.: B65D 23/14, B65D 33/00, B65D 75/54

(54) **GEBRAUCHSGEGENSTAND MIT EINER EINE DATENSPUR AUFWEISENDEN OBERFLÄCHE**
COMMONPLACE OBJECT WITH A SURFACE THAT COMPRISES A DATA TRACK
OBJET USUEL DOTE D'UNE SURFACE PRESENTANT UNE PISTE DE DONNEES

(30) Priorität: 05.10.2001 DE 10149239
(43) Veröffentlichungstag der Anmeldung: 30.06.2004
(73) Patentinhaber: tesa scribos GmbH, 69126 Heidelberg (DE)
(72) Erfinder: BORGSMÜLLER, Stefan, 69121 Heidelberg (DE); DIETRICH, Christoph, 69126 Heidelberg (DE); GERSPACH, Matthias, 69221 Dossenheim (DE); KRESSE, Tobias, 69121 Heidelberg (DE); LEIBER, Jörn, 22529 Hamburg (DE); MAYER, Michael, 69117 Heidelberg (DE); NOEHTE, Steffen, 69469 Weinheim (DE); SCHEIBENSTOCK, Steffen, 70197 Stuttgart (DE); SCHULTE-WIEKING, Kay, 69115 Heidelberg (DE); STADLER, Stefan, 22359 Hamburg (DE); THOMANN, Robert, 69121 Heidelberg (DE)
(74) Vertreter: Rox, Thomas
(86) Internationale Anmeldenummer: PCT/EP2002/010939
(87) Internationale Veröffentlichungsnummer: WO 2003/031273

(56) Entgegenhaltungen:
- WO-A-01/37266
- DE-A- 19 931 992
- DE-U- 29 816 802
- US-A- 4 658 974
- US-A- 5 623 347

## Beschreibung

Die Erfindung betrifft einen Gebrauchsgegenstand mit einer äußeren, den Gebrauchsgegenstand umschließenden Oberfläche und mit mindestens einem zylindrischen Abschnitt der Oberfläche, wobei auf dem zylindrischen Abschnitt entlang mindestens einer Spur eine Datenbitsequenz eingeschrieben ist.

Derartige Gebrauchsgegenstände können Behälter oder Verpackungen sein. Als Behälter kommen Lebensmittelbehälter wie Flaschen oder Gläser in Frage. Daneben können Behälter auch Reagenzgläser oder Aufbewahrungsbehälter für Blutproben sein. Als Verpackungen kommen Verpackungen für zylindrische Gegenstände in Frage, wie beispielsweise Konsumgüterartikel.

Viele der zuvor genannten Gebrauchsgegenstände benötigen Kennzeichnungen, die den Inhalt, die Bestimmung und/oder den Verkaufspreis definieren. Dazu dienen in der Regel Etikette, die entweder direkt lesbare Informationen tragen oder in maschinenlesbarer Form wie beispielsweise in Barcode verschlüsselte Informationen tragen. Dabei ist die Menge an Informationen durch die beschränkt zur Verfügung stehende Fläche begrenzt.

Die US 3,632,995 offenbart einen Gebrauchsgegenstand, auf den ein Etikett aufgeklebt ist, das verschiedene optisch lesbare Informationen aufweist. Zu diesen Informationen gehören auch Spuren mit einer oder mehrerer Datenbitsequenzen. Die Informationen sind dabei auf das Material des Etiketts, beispielsweise Papier, in herkömmlicher Weise aufgedruckt.

Der Erfindung liegt daher das technische Problem zugrunde, einen Gebrauchsgegenstand anzugeben, auf dessen Oberfläche eine größere Menge an Informationen angebracht werden kann.

Das zuvor aufgezeigte technische Problem wird erfindungsgemäß dadurch gelöst, dass zumindest der zylindrische Abschnitt der Oberfläche aus einem optisch veränderbaren Material besteht.

Somit kann erfindungsgemäß die Oberfläche des Gebrauchsgegenstandes selbst als Datenträger verwendet werden. Einschreiben bedeutet dabei jede Form von Variation der Oberflächeneigenschaft, die sich durch Beleuchten mit einem Lichtstrahl reproduzieren lässt. Dabei kann wie bei einer einmal beschreibbaren Compact Disc (CD-R) die Oberfläche durch Ausbilden von Vertiefungen (Pits) mittels der Lichtenergie des Schreibstrahls verändert werden. Daneben kann die Reflektivität der Oberfläche wie bei einer mehrfach beschreibbaren Compact Disc (CD-RW) durch eine Änderung der atomaren Struktur des Materials verändert werden. In jedem der beiden Fälle können durch die Änderungen in der Reflektionseigenschaften entlang der Spur die eingeschriebenen Datenbitsequenzen wieder reproduziert werden.

Ein Vorteil der vorliegenden Erfindung besteht also darin, dass Gebrauchsgegenstände, die bisher nicht zur Speicherung und Wiedergabe von digitalen Informationen benutzt worden sind, gemäß der vorliegenden Erfindung selbst als Datenspeicher verwendet werden können. Die Datenspeicherung bezieht sich dabei hauptsächlich auf die Speicherung von Daten, die sich auf den Gebrauchsgegenstand bzw. dessen Inhalt beziehen.

Ein weiterer Vorteil der Erfindung besteht darin, dass das optische Schreiben und Lesen kontaktlos erfolgt. Dadurch sind die Vorgänge robust und somit gerade bei Gebrauchsgütern gut einsetzbar.

Weiterhin erlaubt das optische Schreiben und Lesen mit fokusiertem Laserstrahl (Apertur (NA)) zwischen 0,3 und 0,6) eine sehr hohe Datendichte.

Schließlich erlaubt die zylindrische Oberfläche eine einfache Art der kontinuierlichen Relativbewegung zwischen der Datenspur und einem Abtaster. Dieser weist - ähnlich wie bei bekannten Abtastern von optischen Speichermedien - einen Abtaststrahl auf, der die in der Datenspur eingeschriebenen Informationen abtastet und veränderlich reflektiert wird. Diese veränderliche Reflektivität des Abtaststrahls enthält dann die binären Informationen, die in einer nachgeschalteten Auswertung dekodiert wird.

Für ein Einschreiben wird der Lichtstrahl einer Lichtquelle, wie beispielsweise eines Lasers, auf die Oberfläche fokussiert und durch unterschiedliche Intensitäten des Lichtstrahls binäre Informationen eingeschrieben. Dazu werden bevorzugt Techniken eingesetzt, die beim Beschreiben von optischen Speichermedien (CD, DVD) eingesetzt werden. Dieses gilt sowohl für die einzusetzende Optik als auch für die Art der einzuschreibenden Datenbitsequenz. Beispielsweise ist es bekannt, bei Compact Discs (CD) die Datenbitsequenzen in einer sogenannten Eight-Fourteen-Modulation (EFM) einzuschreiben.

In bevorzugter Weise besteht das optisch veränderbare Material aus einer Polymerfolie, die aus einem oder mehreren der folgenden Materialien: Polypropylen, Polyethylenterephthalat, Polyethylennaphtalat, Polymethylpenten, Polyimid, in Verbindung mit Absorbern wie Ruß oder verschiedene Farbstoffen, unter Zuhilfenahme von geeigneten Lösungsmitteln beschichtet, oder eingebettet in Polymermatrizen wie z. B. PMMA. Weiterhin sind lösungsmittelhaltige, wasserlösliche und lichthärtende Lacke als beschreibbares Material denkbar. Darüber hinaus sind Farbstoffpolymere denkbar. Ein Klasse sind die Azo-Farbstoffe oder auch die Metall-Azo-Farbstoffe, die auch im Bereich der einmal beschreibbaren CD/DVDs zum Einsatz kommen.

Auch sind klassische Fotomaterialien auf Silberhalogenidbasis möglich. Darüber hinaus, haben sich verschiedene amorphe Halbleiterverbindungen, als leicht lichtveränderbar gezeigt. Beispielsweise sind hier Schwefelarsenid (amorph) oder Galliumarsenid (amorph) zu nennen. Aus dem Bereich der wiederbeschreibbaren CD/DVDs sind bekannt: Ge-Sb-Te-Materialien, die zwischen kristallinem und amorphem Zustand wechseln können.

In weiter bevorzugter Weise verläuft die Spur im wesentlichen tangential zur Oberflächenkrümmung des zylindrischen Abschnittes. Diese Eigenschaft der Spur vereinfacht das Aufbringen der Spur. Denn durch ein Drehen des Gebrauchsgegenstand um die Achse des zylindrischen Abschnittes kann bei feststehender Lichtquelle die Datenbitsequenz durch eine Variation der Strahlungsintensität, insbesondere durch ein Ein- und Ausschalten der Lichtquelle die Datenbitsequenz eingeschrieben werden.

Dabei kann sich die Spur über mehr als einen Umfang des zylindrischen Abschnittes erstrecken, wobei die Spur in Form einer Wendel ausgebildet ist. Die durchgängige Spur erstreckt sich dann über mehr als einen Umfang. Die Wendel ergibt sich beim Einschreiben dadurch, dass der Gebrauchsgegenstand nicht nur um die Achse des zylindrischen Abschnittes gedreht wird, sondern zusätzlich entlang der Achse verschoben wird. Das Verschieben kann dabei kontinuierlich erfolgen, um eine gleichmäßige Wendelform zu erlangen.

Ebenso ist es möglich, dass statt in einer Wendelform die Spur über einen Umfang des zylindrischen Abschnittes als geschlossene Spur eingeschrieben ist, so dass für ein Erzeugen von mehreren Spuren diese beabstandet zueinander auf der zylindrischen Oberfläche eingeschrieben sind.

Es gibt verschiedene Möglichkeiten, die Oberfläche des zylindrischen Abschnittes zu beschreiben. Zum einen kann der zylindrische Abschnitt der Oberfläche direkt beschrieben werden, wobei die optischen Eigenschaften der zylindrischen Oberfläche durch direktes Bestrahlen der Oberfläche verändert werden.

Bei einer weiteren Ausgestaltung der Erfindung besteht der zylindrische Abschnitt der Oberfläche aus einer die Spur aufweisenden Beschichtung. Ist diese Beschichtung beispielsweise nur aufgeklebt, so kann die Datenbitspur vom Gebrauchsgegenstand entfernt werden und ggf. der Gebrauchsgegenstand erneut mit einer Spur versehen werden.

Das Aufkleben bzw. Beschichten des Gebrauchsgegenstandes mit einem Photomaterial als Folie ist zwar nur eine bevorzugte Ausführungsform der Erfindung, jedoch stellt diese Vorgehensweise die geringsten Anforderung an den Gebrauchsgegenstand.

In einer bevorzugten Ausführungsform der vorliegenden Erfindung weist die Spur mit der Datenbitsequenz eine Struktur auf, die kleiner als 10 µm vorzugsweise kleiner als 5 µm und insbesondere kleiner als 3 µm ist. Dadurch wird eine hohe Datendichte in der Spur erreicht, wodurch entweder insgesamt mehr Informationen auf dem zylindrischen Abschnitt gespeichert werden können oder der zylindrische Abschnitt insgesamt verkleinert werden kann, um eine vergleichsweise gleiche Datenmenge einzuschreiben.

Weiterhin ist es besonders bevorzugt, dass die Spur eine Struktur aufweist, die die codierten Informationen in Form von Pits und Lands aufweist. Diese Struktur ist aus der Technologie der optischen Datenträger wie Compact-Disc und Digital-Versatile-Disc bekannt. Dort werden in der Spur entweder abschnittsweise Vertiefungen (Pits) und Abschnitte ohne Vertiefungen (Lands) erzeugt, wobei diese Technologie bei nicht beschreibbaren Speichermedien Verwendung findet.

Daneben ist es bekannt, die Pits und Lands der Spur durch unterschiedliche Reflektionseigenschaften des die Spur bildenden Materials darzustellen. Darüber hinaus ist es bekannt, dass die Ränder der Spur durch eine entsprechende Modulation der Form oder der Oberflächengestaltung ebenfalls zur Speicherung von Informationen genutzt werden.

Bei einer weiteren Ausgestaltung der vorliegenden Erfindung weist die Datenbitsequenz der Spur Informationen auf, die entweder binär, grauwertig, farbig oder analog codiert sind. Dieses soll verdeutlichen, dass die Art der Codierung bei der vorliegenden Erfindung beliebig gewählt werden kann, ohne dass es auf eine besondere Art der Codierung ankommt.

Bei einer weiteren Ausgestaltung der vorliegenden Erfindung sind mindestens zwei verschiedene Spuren mit Datenbitsequenzen mit unterschiedlichen Abständen zur Drehachse des zylindrischen Abschnittes vorgesehen. Mit anderen Worten, es werden mindestens zwei verschiedene Spuren mit unterschiedlichen Radien in das Material des zylindrischen Abschnittes eingeschrieben. Somit können die Spuren nicht nur in axialer Richtung nebeneinander als jeweils geschlossene Spuren oder in Wendelform eingeschrieben sein, sondern es können auch in unterschiedlichen zylindrischen Segmenten mit unterschiedlichen Radien zur Drehachse jeweils Spuren mit Datenbitsequenzen eingeschrieben werden. Auch dadurch erhöht sich die Datendichte innerhalb des zylindrischen Abschnittes des Gebrauchsgegenstandes.

Dabei besteht die Möglichkeit, die mindestens zwei Spuren im gleichen Material des zylindrischen Abschnittes einzuschreiben, es wird also dieselbe Schicht des zylindrischen Abschnittes verwendet. Daneben ist es auch möglich, die mindestens zwei Spuren in unterschiedlichen Lagen eines mehrlagigen Aufbaus des zylindrischen Abschnittes einzuschreiben. Ein derartiger mehrlagiger Aufbau des zylindrischen Abschnittes kann durch Aufbringen mehrerer Lagen von Folien erreicht werden. Dabei können die zuvor erwähnten Folien mit unterschiedlichen Eigenschaften verwendet werden.

Das Prinzip des zuvor aufgezeigten Ausführungsbeispiels, in mehreren Lagen eines Substrates Informationen zu speichern, kann der DE 298 16 802 U entnommen werden. In diesem Dokument wird ein Datenspeicher mit einem spiralartig aufgewickelten Informationsträger offenbart, auf dem optisch auslesbare Informationseinheiten eingeschrieben und anschließend wieder ausgelesen werden können.

Im folgenden wird die Erfindung anhand von zwei Ausführungsbeispielen näher erläutert, wobei auf die Zeichnung Bezug genommen wird. In der Zeichnung zeigen
- Fig. 1: eine Seitenansicht eines Gebrauchsgegenstandes in Form einer Kuvette mit einer im Material des Gebrauchsgegenstandes eingeschriebenen Spur,
- Fig. 2: den in Fig. 1 dargestellten Gebrauchsgegenstand im Querschnitt,
- Fig. 3: eine Seitenansicht eines weiteren Gebrauchsgegenstandes in Form einer Kuvette mit einer aufgebrachten die Spur tragenden Beschichtung und
- Fig. 4: den in Fig. 3 dargestellten Gebrauchsgegenstand im Querschnitt.

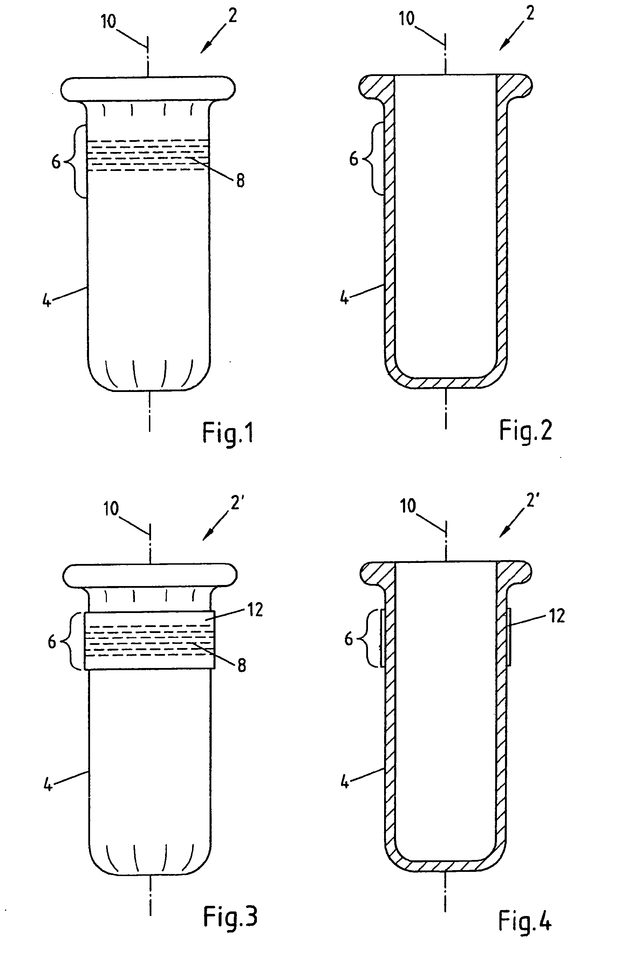

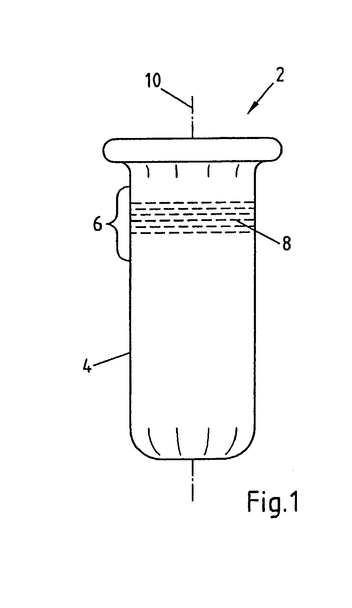

Die Fig. 1 und 2 zeigen ein erstes Ausführungsbeispiel eines erfindungsgemäßen Gebrauchsgegenstandes 2. Es handelt sich um eine Kuvette, wie sie im Bereich der medizinischen Analyse oder auch allgemein im Bereich der chemischen Verarbeitung eingesetzt werden. Diese Kuvetten benötigen eine genaue und dauerhafte Beschriftung, die Informationen insbesondere bezüglich des Inhaltes angeben. Insbesondere bei medizinischen Untersuchungen, beispielsweise bei Blutuntersuchungen, sind zuverlässige Angaben erforderlich, die fest mit der Kuvette verbunden sind.

Selbstverständlich ist die vorliegende Erfindung nicht auf das zuvor beschriebene Beispiel beschränkt. Als Gebrauchsgegenstände kommen alle oben definierten Gegenstände in Betracht.

Die Kuvette, also allgemein der Gebrauchsgegenstand 2 in den Fig. 1 und 2 weist eine äußere, den Gebrauchsgegenstand 2 umschließenden Oberfläche 4 und mindestens einen zylindrischen Abschnitt 6 der Oberfläche 4 auf. Erfindungsgemäß besteht der zylindrische Abschnitt 6 der Oberfläche 4 aus einem optisch veränderbaren Material, wobei auf dem zylindrischen Abschnitt 6 entlang mindestens einer Spur 8 eine Datenbitsequenz eingeschrieben ist. Das optisch veränderbare Material besteht dabei aus einer Polymerfolie, die oben bereits im Detail beschrieben worden ist.

Wie insbesondere Fig. 1 darstellt, verlaufen die Spuren 8 im wesentlichen tangential zur Oberflächenkrümmung des zylindrischen Abschnittes 6. Mit anderen Worten verlaufen die Spuren 8 im wesentlichen in einer Ebene senkrecht zur Achse 10.

Die Einschränkung "im wesentlichen" bezieht sich darauf, dass die in Fig. 1 dargestellten Spuren letztlich zu nur einer in Form einer Wendel verlaufenden Spur 8 gehören, die also eine Steigung in Richtung der Achse 10 des zylindrischen Abschnittes 6 aufweisen. Aufgrund dieser Steigung verläuft die Spur 8 nicht exakt tangential zur Oberflächenkrümmung.

Wie die Fig. 1 und 2 weiterhin darstellen, ist der zylindrische Abschnitt 6 der Oberfläche 4 direkt beschrieben. Das bedeutet, das die binären Informationen direkt in das Material des Gebrauchsgegenstandes 2 eingeschrieben sind.

Das Ausführungsbeispiel gemäß den Figuren 3 und 4 entspricht in vielen Einzelheiten dem in den Fig. 1 und 2 dargestellten Ausführungsbeispiel. Daher bezeichnen gleiche Bezugszeichen gleiche Elemente.

Abweichend vom ersten Ausführungsbeispiel ist der zylindrische Abschnitt 6 der Oberfläche 4 des Gebrauchsgegenstandes 2' des zweiten Ausführungsbeispiels mit einer die Spur 8 aufweisenden Beschichtung 12 versehen. Diese Beschichtung besteht dann aus dem optisch veränderbaren Material, während das Material des Gebrauchsgegenstandes 2' diese Eigenschaft nicht aufzuweisen braucht.

Eine weitere Abweichung vom ersten Ausführungsbeispiel besteht darin, dass die Spur 8 über einen Umfang des zylindrischen Abschnittes 6 geschlossen ist. Somit stellen die in Fig. 3 dargestellten Spuren 8 tatsächlich unterschiedliche, nebeneinander angeordnete Spuren 8 dar.

## Patentansprüche

1. Gebrauchsgegenstand
- mit einer äußeren, den Gebrauchsgegenstand (2) umschließenden Oberfläche (4) und
- mit mindestens einem zylindrischen Abschnitt (6) der Oberfläche (4),
- wobei auf dem zylindrischen Abschnitt (6) entlang mindestens einer Spur (8) eine Datenbitsequenz eingeschrieben ist,
**dadurch gekennzeichnet,**
- **dass** zumindest der zylindrische Abschnitt (6) der Oberfläche (4) aus einem optisch veränderbaren Material besteht.

2. Gebrauchsgegenstand nach Anspruch 1,
**dadurch gekennzeichnet,**
**dass** das Material des zylindrischen Abschnittes (6) aus einer Polymerfolie besteht.

3. Gebrauchsgegenstand nach Anspruch 1 oder 2,
**dadurch gekennzeichnet,**
**dass** die Spur (8) im wesentlichen tangential zur Oberflächenkrümmung des zylindrischen Abschnittes (6) verläuft.

4. Gebrauchsgegenstand nach einem der Ansprüche 1 bis 3,
**dadurch gekennzeichnet,**
**dass** sich die Spur (8) über mehr als einen Umfang des zylindrischen Abschnittes erstreckt und dass die Spur (8) in Form einer Wendel ausgebildet ist.

5. Gebrauchsgegenstand nach einem der Ansprüche 1 bis 3,
**dadurch gekennzeichnet,**
**dass** die Spur (8) über einen Umfang des zylindrischen Abschnittes geschlossen ist.

6. Gebrauchsgegenstand nach einem der Ansprüche 1 bis 5,
**dadurch gekennzeichnet,**
**dass** der zylindrische Abschnitt (6) der Oberfläche (4) direkt beschrieben ist.

7. Gebrauchsgegenstand nach einem der Ansprüche 1 bis 5,
**dadurch gekennzeichnet,**
**dass** der zylindrische Abschnitt (6) der Oberfläche (4) aus einer die Spur (8) aufweisenden Beschichtung (12) besteht.

8. Gebrauchsgegenstand nach einem der Ansprüche 1 bis 7,
**dadurch gekennzeichnet,**
**dass** die Spur (8) eine Struktur aufweist, die kleiner als 10 µm, vorzugsweise kleiner als 5 µm und insbesondere kleiner als 3 µm ist.

9. Gebrauchsgegenstand nach einem der Ansprüche 1 bis 8,
**dadurch gekennzeichnet,**
**dass** die Spur (8) eine Struktur aufweist, die die codierten Informationen in Form von Pits and Lands aufweist.

10. Gebrauchsgegenstand nach einem der Ansprüche 1 bis 9,
**dadurch gekennzeichnet,**
**dass** die Datenbitsequenz Informationen aufweist, die eine binäre, grauwertige, farbige oder analoge Codierung aufweist.

11. Gebrauchsgegenstand nach einem der Ansprüche 1 bis 10,
**dadurch gekennzeichnet,**
**dass** mindestens zwei verschiedene Spuren (8) mit Datenbitsequenzen mit unterschiedlichen Abständen zur Drehachse des zylindrischen Abschnittes (4) vorgesehen sind.

12. Gebrauchsgegenstand nach Anspruch 11,
**dadurch gekennzeichnet,**
**dass** die mindestens zwei Spuren (8) in einer Schicht des zylindrischen Abschnittes (4) eingeschrieben sind.

13. Gebrauchsgegenstand nach Anspruch 11,
**dadurch gekennzeichnet,**
**dass** die mindestens zwei Spuren (8) in unterschiedlichen Lagen eines mehrlagigen Aufbaus des zylindrischen Abschnittes (4) eingeschrieben sind.

## Claims

1. Commonplace object
- with an outer surface (4) that encircles the commonplace object (2) and
- with at least one cylindrical section (6) of the surface (4),
- a data bit sequence being written along at least one track (8) on the cylindrical section (6),
**characterized in that**
- at least the cylindrical section (6) of the surface (4) consists of a material which can be changed optically.

2. Commonplace object according to Claim 1, **characterized in that** the material of the cylindrical section (6) consists of a polymer film.

3. Commonplace object according to Claim 1 or 2, **characterized in that** the track (8) runs substantially tangentially with respect to the surface curvature of the cylindrical section (6).

4. Commonplace object according to one of Claims 1 to 3, **characterized in that** the track (8) extends over more than one circumference of the cylindrical section, and **in that** the track (8) is designed in the form of a helix.

5. Commonplace object according to one of Claims 1 to 3, **characterized in that** the track (8) is closed over one circumference of the cylindrical section.

6. Commonplace object according to one of Claims 1 to 5, **characterized in that** the cylindrical section (6) of the surface (4) is written on directly.

7. Commonplace object according to one of Claims 1 to 5, **characterized in that** the cylindrical section (6) of the surface (4) consists of a coating (12) comprising the track (8).

8. Commonplace object according to one of Claims 1 to 7, **characterized in that** the track (8) has a structure which is smaller than 10 µm, preferably smaller than 5 µm and in particular smaller than 3 µm.

9. Commonplace object according to one of Claims 1 to 8, **characterized in that** the track (8) has a structure which comprises the coded information in the form of pits and lands.

10. Commonplace object according to one of Claims 1 to 9, **characterized in that** the data bit sequence comprises information which has a binary, gray-value, colored or analog code.

11. Commonplace object according to one of Claims 1 to 10, **characterized in that** at least two different tracks (8) with data bit sequences at different distances from the axis of rotation of the cylindrical section (4) are provided.

12. Commonplace object according to Claim 11, **characterized in that** the at least two tracks (8) are written in a layer of the cylindrical section (4).

13. Commonplace object according to Claim 11, **characterized in that** the at least two tracks (8) are written in different layers of a multilayer structure of the cylindrical section (4).

## Revendications

1. Objet usuel
- comprenant une surface extérieure (4), entourant l'objet usuel (2) et
- comprenant au moins une portion cylindrique (6) de la surface (4),
- une séquence de bits de données étant inscrite sur la portion cylindrique (6) le long d'au moins une piste (8),
**caractérisé en ce que**
- au moins la portion cylindrique (6) de la surface (4) se compose d'un matériau optiquement modifiable.

2. Objet usuel selon la revendication 1,
**caractérisé en ce que**
le matériau de la portion cylindrique (6) se compose d'une feuille polymère.

3. Objet usuel selon la revendication 1 ou 2,
**caractérisé en ce que**
la piste (8) s'étend essentiellement tangentiellement à la courbure de la surface de la portion cylindrique (6).

4. Objet usuel selon l'une quelconque des revendications 1 à 3,
**caractérisé en ce que**
la piste (8) s'étend sur plus d'un tour de la portion cylindrique et **en ce que** la piste (8) est réalisée en forme d'hélice.

5. Objet usuel selon l'une quelconque des revendications 1 à 3,
**caractérisé en ce que**
la piste (8) est fermée sur un tour de la portion cylindrique.

6. Objet usuel selon l'une quelconque des revendications 1 à 5,
**caractérisé en ce que**
la portion cylindrique (6) de la surface (4) est directement écrite.

7. Objet usuel selon l'une quelconque des revendications 1 à 5,
**caractérisé en ce que**
la portion cylindrique (6) de la surface (4) se compose d'un revêtement (12) présentant la piste (8).

8. Objet usuel selon l'une quelconque des revendications 1 à 7,
**caractérisé en ce que**
la piste (8) présente une structure qui est inférieure à 10 µm, de préférence inférieure à 5 µm, et en particulier inférieure à 3 µm.

9. Objet usuel selon l'une quelconque des revendications 1 à 8,
**caractérisé en ce que**
la piste (8) présente une structure qui présente les informations codées sous forme de creux et plateaux.

10. Objet usuel selon l'une quelconque des revendications 1 à 9,
**caractérisé en ce que**
la séquence de bits de données présente des informations qui présentent un codage binaire, un codage en niveaux de gris, en couleur ou analogue.

11. Objet usuel selon l'une quelconque des revendications 1 à 10,
**caractérisé en ce que**
au moins deux pistes différentes (8) sont prévues avec des séquences de bits de données ayant des intervalles différents par rapport à l'axe de rotation de la portion cylindrique (4).

12. Objet usuel selon la revendication 11,
**caractérisé en ce que**
les au moins deux pistes (8) sont inscrites dans une couche de la portion cylindrique (4).

13. Objet usuel selon la revendication 11,
**caractérisé en ce que**
les au moins deux pistes (8) sont inscrites dans des couches différentes d'une structure multicouche de la portion cylindrique (4).
